# EUROPÄISCHE PATENTSCHRIFT

(11) **EP 3 062 363 B1**
(45) Veröffentlichungstag und Bekanntmachung des Hinweises auf die Patenterteilung: **31.05.2023**
(21) Anmeldenummer: 15000555.1
(22) Anmeldetag: 26.02.2015
(51) Int. Cl.: H01M 50/581, H01M 50/204, H01M 10/42, H01M 10/48, H01M 10/625, H01M 10/658, H01M 50/249, B64D 41/00, B60L 50/64, H01M 10/052, B64C 39/02

(54) **Batterieanordnung**
Battery assembly
Assemblée batterie

(43) Veröffentlichungstag der Anmeldung: 31.08.2016
(73) Patentinhaber: Airbus Defence and Space GmbH, 85521 Ottobrunn (DE)
(72) Erfinder: Burns, Simon, 80935 München (DE)
(74) Vertreter: LKGLOBAL Lorenz & Kopf Patentanwalt Attorney at Law PartG mbB

(56) Entgegenhaltungen:
- DE-A1-102011 113 798
- DE-A1-102012 205 144
- JP-A- 2004 362 879
- US-A1- 2012 242 144
- US-A1- 2014 242 424
- US-A1- 2015 050 530

## Beschreibung

Verschiedene Ausführungsformen betreffen allgemein eine Batterieanordnung sowie ein Fahrzeug mit Batterieanordnung.

Im Fahrzeugbau, beispielsweis im Automobilbau und Flugzeugbau werden immer häufiger Akkumulatoren für elektrische Antriebe, Teilantriebe oder zumindest zur Energieversorgung von elektrischen Einrichtungen eingesetzt. Hierbei werden unter anderem auch verschiedene Lithiumbasierte Akkumulatoren eingesetzt, da dieser eine relativ große spezifische Energie aufweisen.

Bei verschiedenen Lithiumbasierten Akkumulatoren mit flüssigen oder polymeren Elektrolyten kann es unter Umständen möglich sein, dass es ohne spezielle Schutzmaßnahmen zum thermischen Durchgehen kommen kann. Mechanische Beschädigungen können beispielsweise zu inneren Kurzschlüssen führen. Die hohen fließenden Ströme können beispielsweise unter Umständen zur Erhitzung des Akkumulators führen. Gehäuse aus Kunststoff können beispielsweise schmelzen und entflammen. Unter Umständen kann ein mechanischer Defekt nicht unmittelbar zu erkennen sein. Auch längere Zeit nach dem mechanischen Defekt kann es noch zum inneren Kurzschluss kommen. Ebenso kann durch äußere Beschädigung Luft und insbesondere Luftfeuchtigkeit in die Zelle eindringen und chemische Reaktionen hervorrufen. Bei thermischer Belastung kann es bei verschiedenen Lithium-Ionen-Akkus zum Schmelzen des verwendeten Separators und damit zu einem inneren Kurzschluss mit schlagartiger Energiefreisetzung (Erhitzung, Entflammung) kommen. Eine weitere Gefahr kann möglicherweise von exothermen Zersetzungsreaktionen der Zellchemikalien bei Überlastung, insbesondere beim Laden ausgehen.

Im Automobilbau und insbesondere im Flugzeugbau sind besonders hohe Sicherheitsanforderungen an die verwendeten Akkumulatoren auf Grund der hohen installierten Energiemengen erforderlich.

Die DE 10 2011 113 798 A1 offenbart eine Batterie, deren Komponenten keine erhöhten und damit potentiell gefährlichen Spannungen aufweisen.

Davon ausgehend ist es Aufgabe der Erfindung, eine verbesserte Batterieanordnung bereitzustellen.

Diese Aufgabe wird mit einer Vorrichtung mit den Merkmalen des Anspruchs 1 gelöst. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen der Verwendung der Vorrichtung gelten und umgekehrt.

Es wird ein Fahrzeug mit einer Batterieanordnung angegeben, die Batterieanordnung aufweisend eine Mehrzahl von elektrisch miteinander verbundenen Batteriezellen, wobei jede der Batteriezellen eine Mehrzahl von elektrochemischen Einzelzellen aufweist. Jede der Batteriezellen ist von den weiteren Batteriezellen der Mehrzahl von Batteriezellen thermisch isoliert. Jede der elektrochemischen Einzelzellen weist eine Überwachungsvorrichtung auf. Die Überwachungsvorrichtung ist eingerichtet, die Batteriezelle von den weiteren Batteriezellen elektrisch zu trennen, wenn mindestens ein von der Überwachungsvorrichtung zu überwachender Messwert außerhalb eines vorbestimmten Wertebereichs liegt.

Der Erfindung liegt der Gedanke zugrunde, dass jede der Batteriezellen ein eigenständiges Bauelement ist und dass die Batteriezellen der Batterieanordnung thermisch voneinander zu trennen sind. Für den Fall, dass wenigstens eine der elektrochemischen Einzelzellen der Batteriezellen einen Messwert aufweist, der außerhalb eines vorbestimmten Wertebereichs liegt, wird die gesamte Batteriezelle von den weiteren Batteriezellen der Batterieanordnung elektrisch getrennt. Dies hat zum einen den Vorteil, dass durch die thermische Trennung keinen weiteren elektrochemischen Einzelzellen der weiteren Batteriezellen beschädigt werden. Darüber hinaus hat dies den Vorteil, dass bei einem Ausfall einer oder auch mehrerer Batteriezellen die weiteren Batteriezellen unabhängig weiter zur Verfügung stehen. Bei einem Ausfall nur einer begrenzten Anzahl von Batteriezellen kann die Batterieanordnung mit etwas verringerter Leistung weiter verwendet werden.

Unter dem Begriff elektrochemische Einzelzelle ist ein vorzugsweise wiederaufladbarer Energiespeicher für elektrische Energie zu verstehen, auch als Sekundärelement bezeichnet. Eine Batteriezelle umfasst eine Mehrzahl von elektrochemischen Einzelzellen bzw. Sekundärelementen. Die Einzelzellen der Batteriezelle sind vorzugsweise seriell elektrisch miteinander verbunden. Alternativ können die Einzelzellen einer Batteriezelle auch parallel miteinander verbunden sein. Unter dem Begriff Batterie ist allgemein ein sogenannter Akkumulator, d.h. eine aufladbare Batterie zu verstehen. Die Überwachungsvorrichtung ist vorzugsweise teilweise an oder zumindest in der Nähe der elektrochemischen Einzelzelle angeordnet, wobei die Überwachungsvorrichtung vorzugsweise zumindest teilweise so angeordnet ist, dass diese in der Lage ist, den zu überwachenden Messwert der elektrochemischen Einzelzelle direkt oder indirekt zu erfassen oder zu empfangen.

Unter dem Begriff thermische Isolation ist eine thermische Trennung der Batteriezellen der Batterieanordnung zu verstehen. Im Extremfall würde bei einem thermischen Durchgehen einer elektrochemischen Einzelzelle eine reine thermische Isolation basierend auf einer reinen materialbedingten thermischen Isolation möglicherweise nicht ausreichen, so dass die benachbarten Batteriezellen beschädigt werden könnten.

Ein Wertebereich ist durch wenigstens zwei Werte einer physikalischen Größe, beispielsweise Temperatur, Spannung, Stromstärke usw., definiert. Vorzugsweise wird der Wertebereich durch einen oberen und einen unteren Wert bestimmt, d.h. zwei unterschiedlich Werte. Alternativ kann der Wertebereich auch durch einen einzelnen Wert und der Angabe ob der Wertebereich oberhalb oder unterhalb dieses Wertes liegt bestimmt sein.

Gemäß einer Ausführungsform sind die Batteriezellen räumlich getrennt voneinander angeordnet. Die einzelnen Batteriezellen der Batterieanordnung sind, um eine bessere thermische Trennung voneinander zu erreichen, vorzugsweise räumlich getrennt voneinander angeordnet. Genauer gesagt sind die mehreren Batteriezellen der Batterieanordnung beispielsweise in unterschiedlichen Bereichen eines Fahrzeugs, beispielsweise eines Flugzeugs, eines Kraftfahrzeugs oder dergleichen angeordnet. Durch die räumliche Trennung der Batteriezellen wird eine bessere thermische Isolation der einzelnen Batteriezellen zueinander erreicht. Bei einem Durchbrennen einer oder mehrerer elektrochemischer Einzelzellen einer Batteriezelle sind weitere räumlich von dieser beabstandete Batteriezellen der Batterieanordnung somit nicht davon betroffen.

Gemäß einer Ausführungsform weist die Überwachungsvorrichtung eine Erfassungseinheit auf, die eingerichtet ist, den zu überwachenden Messwert der elektrochemischen Einzelzelle zu erfassen. Die Erfassungseinheit erfasst den zu überwachenden Messwert der elektrochemischen Einzelzelle. Vorzugsweise ist die Erfassungseinheit so angeordnet, dass diese zumindest teilweise in thermischen, elektrischen oder anderweitigen Kontakt mit der elektrochemischen Einzelzelle steht, damit eine Erfassung des Messwerts möglich ist. Beispielsweise ist die Erfassungseinheit wenigstens teilweise an oder in der elektrochemischen Einzelzelle oder zumindest Teilen dieser angeordnet.

Gemäß einer Ausführungsform weist die Überwachungsvorrichtung eine Auswertevorrichtung auf, die den von der Erfassungseinheit erfassten Messwert empfängt und ermittelt, ob dieser außerhalb des vorbestimmten Wertebereichs liegt. Um den von der Erfassungseinheit erfassten Messwert auszuwerten, wird der erfasste Messwerte - oder die, bei mehreren Messwerten - von der Erfassungseinheit an die Auswertevorrichtung der Überwachungsvorrichtung übermittelt. Die Auswertevorrichtung ermittelt, ob der erfasste Messwert außerhalb des vorbestimmten Wertebereichs liegt. Der vorbestimmte Wertebereich, beispielsweise zwei vorzugsweise unterschiedliche Temperaturwerte, ist hierbei beispielsweise in einer Speichervorrichtung der Überwachungsvorrichtung oder der Auswertevorrichtung gespeichert. Die Auswertevorrichtung vergleicht beispielsweise den von der Erfassungseinheit erfassten Temperaturwert mit den gespeicherten Temperaturwerten um zu ermitteln, ob der erfasste Temperaturwert innerhalb des durch die zwei gespeicherten Temperaturwerte definierten Wertebereichs liegt.

Gemäß einer Ausführungsform umfasst die Erfassungseinheit mindestens einen Temperatursensor zum Erfassen der Temperatur der elektrochemischen Einzelzelle. Um die Temperatur der elektrochemischen Einzelzelle zu erfassen, weist die Erfassungseinheit beispielsweise einen Temperatursensor, beispielsweise einen PTC- (Temperatursensor mit positivem Temperaturkoeffizienten) oder einen NTC- (Temperatursensor mit negativem Temperaturkoeffizienten) Sensor auf. Um die Temperatur der elektrochemischen Einzelzelle möglichst genau zu erfassen, ist der Temperatursensor möglichst nahe an der Wärmequelle, d.h. teilweise oder vollständig an oder in Teilen der elektrochemischen Einzelzelle angeordnet.

Gemäß einer Ausführungsform ist die Überwachungsvorrichtung eingerichtet die Batteriezelle von den weiteren Batteriezellen der Mehrzahl von Batteriezellen elektrisch zu trennen, wenn die von dem Temperatursensor erfasste Temperatur der elektrochemischen Einzelzelle außerhalb eines vorbestimmten Temperaturbereichs liegt. Sollte beispielsweise der von der Erfassungseinheit erfasste Messwert außerhalb des vorbestimmten Messbereichs liegen, könnte dies auf ein beginnendes Durchbrennen einer der elektrochemischen Einzelzellen der Batteriezelle hindeuten. Um eine weitere Beschädigung zu reduzieren, trennt die Überwachungsvorrichtung diese Batteriezelle elektrisch von den weiteren Batteriezellen der Batterieanordnung.

Gemäß einer Ausführungsform ist die Überwachungsvorrichtung eingerichtet die Batteriezelle elektrisch von den weiteren Batteriezellen zu trennen, wenn die erfasste Temperatur der elektrochemischen Einzelzelle über einem vorbestimmten Temperaturwert liegt. Sollte beispielsweise der von der Erfassungseinheit erfasste Messwert über einem vorbestimmten Temperaturwert liegen, könnte dies auf ein beginnendes Durchbrennen einer der elektrochemischen Einzelzellen der Batteriezelle hindeuten. Alternativ kann in der Speichervorrichtung nur ein einzelner Wert gespeichert sein, der einen Schwellwert für die von der Erfassungsvorrichtung zu erfassende Temperatur der elektrochemischen Einzelzelle darstellt.

Gemäß einer Ausführungsform weist jeder der Batteriezellen mindestens eine weitere Erfassungseinheit auf, die einen Spannungssensor zum Erfassen der an der Batteriezelle anliegenden Spannung umfasst. Mittels des Spannungssensors der weiteren Erfassungseinheit kann beispielsweise eine Spannungsänderung, wie beispielsweise ein Spannungsabfall der Batteriezelle erfasst werden, der beispielsweise auf den Ausfall einer oder mehrerer der elektrochemischen Einzelzellen der Batteriezelle deuten könnte. Durch eine elektrische Trennung der gesamten Batteriezelle von den weiteren Batteriezellen der Batterieanordnung kann unter Umständen eine weitere Beschädigung der Batterieanordnung oder auch der Batteriezelle selbst verhindert werden.

Gemäß einer Ausführungsform umfasst die mindestens eine weitere Erfassungseinheit einen Stromsensor zum Erfassen des an der Batteriezelle anliegenden Stroms. Mittels des Stromsensors der weiteren Erfassungseinheit kann beispielsweise ein Leistungsabfall der Batteriezelle erfasst werden, der beispielsweise auf den Ausfall einer oder mehrerer der elektrochemischen Einzelzellen der Batteriezelle deuten könnte. Durch eine elektrische Trennung der gesamten Batteriezelle von den weiteren Batteriezellen der Batterieanordnung kann unter Umständen eine weitere Beschädigung der Batterieanordnung oder auch der Batteriezelle selbst verhindert werden.

Gemäß einer Ausführungsform ist die elektrochemische Einzelzellen ein Lithium-Ionen-Akkumulator ist. Ein Lithium-Ionen-Akkumulator oder Lithiumakkumulator ist ein Akkumulator auf der Basis von Lithiumverbindungen in allen drei Phasen der elektrochemischen Zelle. Die reaktiven Materialien sowohl in der negativen als auch in der positiven Elektrode sowie der Elektrolyt enthalten Lithiumionen. Bei verschiedenen Lithium-Ionen-Akkus mit flüssigen oder polymeren Elektrolyten kann es ohne spezielle Schutzmaßnahmen beispielweise zum thermischen Durchgehen kommen. Durch die hierin beschriebene Batterieanordnung werden die Auswirkungen beim thermischen Durchgehen einer oder mehrerer elektrochemischer Einzelzellen einer Batteriezelle auf die weiteren Batteriezellen der Batterieanordnung minimiert.

Gemäß einer Ausführungsform ist der Lithium-Ionen-Akkumulator ein Lithium-Schwefel-Akkumulator (Li-S) ist. Bei einem Lithium-Schwefel-Akkumulator wird in der Kathode Schwefel in der Regel als Komposit mit Kohlenstoff eingesetzt. Dadurch erhält die Elektrode eine genügende elektrische Leitfähigkeit. Die strukturellen Eigenschaften wie die Porengeometrie und die spezifische Oberfläche des Kohlenstoffs wirken sich entscheidend auf den nutzbaren Schwefelanteil und damit die spezifische Kapazität der Kathode aus. Für die Anode wird in der Regel Lithium-Metall als Folie oder Beschichtung eingesetzt. Auf Basis der Li-S-Zellen lassen sich Batterien mit deutlich reduziertem Gewicht bei gleichem Energieinhalt und Volumen herstellen.

Zur Lösung der Aufgabe wird darüber hinaus ein Fahrzeug angegeben, das mindestens eine zuvor beschriebene Batterieanordnung aufweist. Unter einem Fahrzeug ist ein Luftfahrzeug, ein Wasserfahrzeug oder ein Landfahrzeug zu verstehen.

Gemäß einer Ausführungsform ist die Mehrzahl der Batteriezellen der mindestens einen Batterieanordnung räumlich über das Fahrzeug verteilt angeordnet. Beispielweise kann die zuvor beschriebene Batterieanordnung derart in einem Fahrzeug eingesetzt werden, dass die einzelnen Batteriezellen der Batterieanordnung in unterschiedlichen Bereichen des Fahrzeugs, beispielweise ein Luftfahrzeug, angeordnet sind. Durch eine räumliche Trennung der Batteriezellen wir eine thermische Isolation der einzelnen Batteriezellen erreicht. Bei einem thermischen Durchgehen einer oder mehrerer elektrochemische Einzelzellen einer Batteriezelle sind die weiteren Batteriezellen der Batterieanordnung nicht betroffen.

Gemäß einer Ausführungsform ist das Fahrzeug ein Fluggerät. Alternativ kann das Fahrzeug auch ein Kraftfahrzeug, beispielsweise ein Automobil, oder ein Wasserfahrzeug, beispielsweise ein Schiff, sein. Als Fluggerät ist ein Luftfahrzeug zu verstehen, genauer gesagt ein Gerät, das innerhalb der Erdatmosphäre fliegt oder fährt.

Gemäß einer Ausführungsform ist das Fluggerät ein unbemanntes Flugzeug, wie ein UAV (unmanned aerial vehicle) sein. Beispielsweise kann das Fluggerät ein unbemanntes Leicht- oder Ultraleichtflugzeug sein. Alternativ kann das Fluggerät auch ein bemanntes Flugzeug sein.

Gemäß einer Ausführungsform ist das Fluggerät eine Höhenplattform oder ein Pseudosatellit, oder ein sogenannter Pseudolit. Pseudolit ist ein Begriff der sich aus Pseudo und Satellit zusammensetzt. Ein Pseudosatellit ist ein terrestrischer oder terrestrisch naher Sender, der Signale aussendet, die diejenigen eines Satelliten nachahmen. In der vorliegenden Form dient das Fluggerät als terrestrisch naher (im Vergleich zu einem echten Satellit) Sender. Pseudoliten werden zum Beispiel verwendet, um lokal die Messgenauigkeit von satellitengestützten Navigationssystemen, wie z. B. GPS, zu erhöhen. Für einen GPS-Empfänger erscheinen Pseudoliten als zusätzliche Satelliten. Pseudoliten werden auch eingesetzt, um Signale für Satellitenradio in Städten zu verbreiten. Genauer gesagt übernehmen Pseudoliten u.a. Aufgaben die im Allgemeinen von Satelliten ausgeführt werden, haben jedoch den Vorteil, dass die Kosten für einen derartigen Pseudoliten in der Regel um einiges geringer sind als für einen echten Satelliten. Insbesondere entfallen teure Kosten für eine Trägerrakete, die in der Regel notwendig ist, um einen "echten" Satelliten in den Orbit zu befördern. Höhenplattform (englisch high altitude platform (station), HAP(S)) ist ein Oberbegriff für quasistationäre, unbemannte Flugobjekte in großer Höhe. Eine Höhenplattform kann zur Überwachung (Verkehr, Veranstaltung, Wetter) oder bei entsprechender Höhe sogar für Mobilfunk ohne die von Satelliten bekannte Verzögerung eingesetzt werden.

Beispielweise kann die zuvor beschriebene Batterieanordnung derart in einem Fluggerät eingesetzt werden, dass die einzelnen Batteriezellen der Batterieanordnung in unterschiedlichen Bereichen des Fluggeräts angeordnet sind. Durch eine räumliche Trennung der Batteriezellen wir eine thermische Isolation der einzelnen Batteriezellen erreicht. Bei einem thermischen Durchgehen einer oder mehrerer elektrochemische Einzelzellen einer Batteriezelle sind die weiteren Batteriezellen der Batterieanordnung nicht betroffen.

In den Zeichnungen beziehen sich im Allgemeinen gleiche Bezugszeichen auf die gleichen Teile über die verschiedenen Ansichten hinweg. Die Zeichnungen sind nicht notwendigerweise maßstabsgetreu; Wert wird stattdessen im Allgemeinen auf die Veranschaulichung der Prinzipien der Erfindung gelegt. In der folgenden Beschreibung werden verschiedene Ausführungsformen der Erfindung beschrieben unter Bezugnahme auf die folgenden Zeichnungen, in denen:
- FIG. 1: eine Ausführungsform der Batterieanordnung zeigt;
- FIG. 2: eine Ausführungsform einer Überwachungsvorrichtung an einer elektrochemischen Einzelzelle zeigt;
- FIG. 3: eine Ausführungsform einer Batteriezelle zeigt;
- FIG. 4: eine herkömmliche Batterieanordnung zeigt; und
- FIG. 5: ein Flugzeug mit einer Ausführungsform der Batterieanordnung zeigt.

Die folgende detaillierte Beschreibung nimmt Bezug auf die beigefügten Zeichnungen, welche zur Erläuterung spezifische Details und Ausführungsformen zeigen, in welchem die Erfindung praktiziert werden kann.

Das Wort "beispielhaft" wird hierin verwendet mit der Bedeutung "als ein Beispiel, Fall oder Veranschaulichung dienend". Jede Ausführungsform oder Ausgestaltung, die hierin als "beispielhaft" beschrieben ist, ist nicht notwendigerweise als bevorzugt oder vorteilhaft gegenüber anderen Ausführungsformen oder Ausgestaltungen auszulegen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

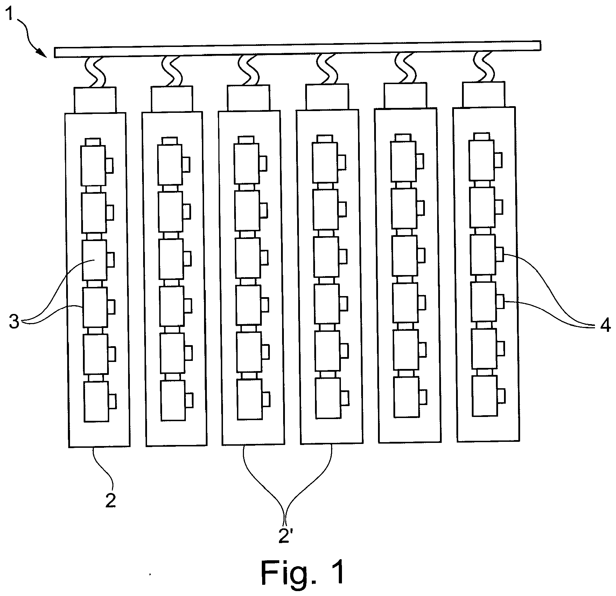

FIG. 1 zeigt eine Ausführungsform der Batterieanordnung 1. Die Batterieanordnung 1weist eine Mehrzahl von elektrisch miteinander verbundenen Batteriezellen 2, 2' auf. Jede der Batteriezellen 2 weist eine Mehrzahl von elektrochemischen Einzelzellen 3 auf. Jede der Batteriezellen 2 ist von den weiteren Batteriezellen 2' der Mehrzahl von Batteriezellen 2, 2' der Batterieanordnung 1 thermisch isoliert. Jede der elektrochemischen Einzelzellen 3 der Batteriezellen 2, 2' weist eine Überwachungsvorrichtung 4 auf. Die Überwachungsvorrichtung 4 ist eingerichtet, die Batteriezelle 2 von den weiteren Batteriezellen 2' elektrisch zu trennen, wenn mindestens ein von der Überwachungsvorrichtung 4 zu überwachender Messwert außerhalb eines vorbestimmten Wertebereichs liegt. Obwohl die Batteriezellen 2, 2' der Batterieanordnung 1 in der dargestellten Ausführungsform der Batterieanordnung 1 relativ nahe zueinander angeordnet sind, kann der Abstand der Batteriezellen 2, 2` nahezu beliebig groß sein und ist im Wesentlichen nur durch die Abmessungen beispielsweise eines Fahrzeugs in dem die Batterieanordnung 1 verwendet wird, begrenzt. Vorzugsweise werden die Abstände der Batteriezellen 2, 2' zueinander jedoch so gewählt werden, dass die Leistungsverlust zwischen den einzelnen Batteriezellen 2, 2' der Batterieanordnung 1 nicht zu groß werden. Vorzugsweise ist hierbei jedoch jede Batteriezelle 2, 2' als eigenständiges Bauelement, beispielweise mit eigenem Gehäuse oder dergleichen anzusehen, das räumlich von den weiteren Batteriezellen 2, 2' getrennt angeordnet ist. Durch eine vorzugsweise räumliche Trennung wird eine bestmögliche thermische Isolation der Batteriezellen 2, 2' der Batterieanordnung zueinander erreicht. Bei einem thermischen Durchgehen, d.h. Durchbrennen, einer oder mehrerer elektrochemischer Einzelzellen 3 einer Batteriezelle 2, werden die weiteren Batteriezellen 2' nicht mit beschädigt. Die Überwachungsvorrichtung 4 ist eingerichtet beispielsweise eine Temperaturerhöhung der elektrochemischen Einzelzelle 3 zu erfassen. Durch eine elektrische Trennung der beschädigten Batteriezelle 2 von den weiteren Batteriezellen 2` der Batterieanordnung 1 können die verbleibenden Batteriezellen 2' der Batterieanordnung 1 weiter verwendet werden. Unterteilt man die Batterieanordnung 1 in viele kleine Batteriezellen 2, 2' ist zudem die Auswirkung auf die Batterieanordnung 1 durch den Leistungsverlust einer oder einiger weniger Batteriezellen 2 relativ gering.

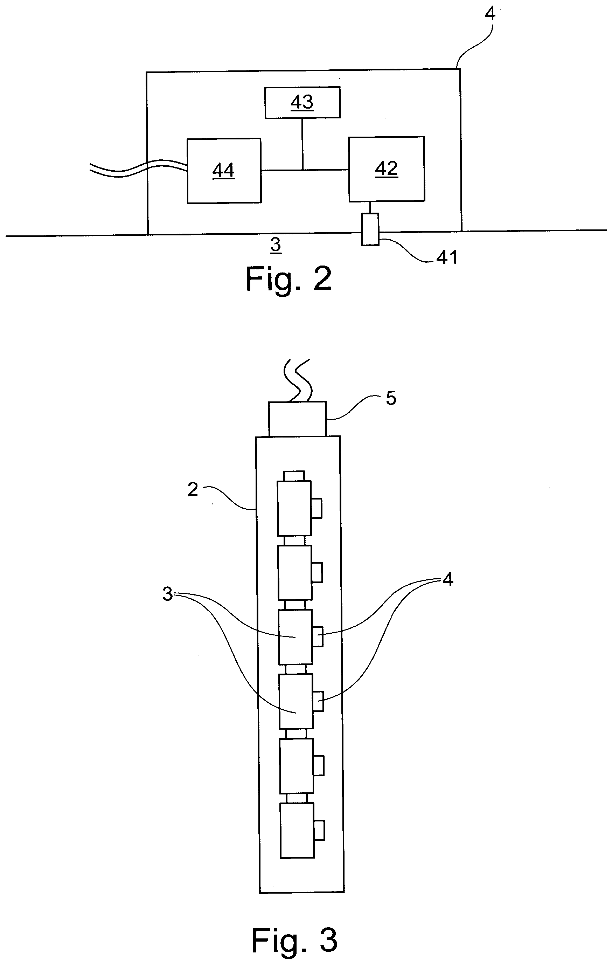

FIG. 2 zeigt eine Ausführungsform einer Überwachungsvorrichtung 4 an einer elektrochemischen Einzelzelle 3. Die Überwachungsvorrichtung 4 weist in der dargestellten Ausführungsform eine Erfassungseinheit 41, eine Auswertevorrichtung 42, eine Speichervorrichtung 43 und eine Kommunikationsvorrichtung 44 auf. Die Erfassungseinheit 41, die Auswertevorrichtung 42, die Speichervorrichtung 43 und die Kommunikationsvorrichtung 44 sind miteinander verbunden. Die Erfassungseinheit 41 erfasst den zu erfassenden Messwert, beispielsweise die Temperatur der elektrochemischen Einzelzelle 3 mittels eines Temperatursensors (nicht im Detail dargestellt) und übermittelt die Messwerte an die Auswertevorrichtung 42. Die Auswertevorrichtung 42 vergleicht die von der Erfassungseinheit 41 übermittelten Messwerte mit einem in der Speichervorrichtung 43 gespeicherten Schwellwert oder einem Wertebereich, d.h. einem oberen Schwellwert und einem unteren Schwellwert. Die Auswertevorrichtung 42 ermittelt, ob der gemessene Temperaturwert unterhalb oder oberhalb des Schwellwerts liegt. Eine Temperaturerhöhung der elektrochemischen Einzelzelle kann möglicherweise auf ein thermisches Durchgehen der elektrochemischen Einzelzelle hindeuten. Wurde von der Auswertevorrichtung 42 ermittelt, dass die Temperatur der elektrochemischen Einzelzelle 3 zu hoch ist, d.h. oberhalb des gespeicherten Schwellwerts liegt, wird über die Kommunikationsvorrichtung 44 beispielsweise ein Signal, beispielsweise einen Stromimpuls, an eine Trennvorrichtung, beispielsweise ein Halbleiterbauelement, wie beispielsweise ein MOSFET, oder einen Transistor oder dergleichen geleitet. Die gesamte Batteriezelle 2 wird dadurch von den weiteren Batteriezellen 2' der Batterieanordnung 1, wie beispielsweise in Figur 1 dargestellt, elektrisch getrennt.

FIG. 3 zeigt eine Ausführungsform einer Batteriezelle 2. Die Batteriezelle 2 weist eine Mehrzahl von in Reihe geschalteten elektrochemischen Einzelzellen 3 auf. Die elektrochemischen Einzelzellen 3 weisen jeweils eine Überwachungsvorrichtung 4 auf. Um beispielsweise die Spannung der Batteriezelle 2 oder den an der Batteriezelle 2 anliegenden Strom zu erfassen weist die Batteriezelle 2 eine weitere Überwachungsvorrichtung 5 auf. Die weitere Überwachungsvorrichtung 5 umfasst beispielsweise einen Spannungssensor und/oder einen Stromsensor mittels denen die Spannung der Batteriezelle bzw. der an der Batteriezelle anliegende Strom erfasst werden kann. Eine Spannungs- bzw. Leistungsänderung kann beispielsweise auf einen Defekt bei einer oder mehreren der elektrochemischen Einzelzellen der Batteriezelle, beispielsweise aufgrund eines beginnenden thermischen Durchgehens hindeuten. Beispielsweise kann die gesamte Batteriezelle 2 von den weiteren Batteriezellen 2' der Batterieanordnung 1, wie beispielsweise in Figur 1 dargestellt, elektrisch getrennt werden, wenn die Spannungs- bzw. Leistungsänderung einen kritischen Wert überschreiten sollte. Hierzu kann die weitere Überwachungsvorrichtung 5, beispielsweise eine Speichervorrichtung aufweisen in der ein oder mehrere Schwellwerte gespeichert sind und die in einer Auswertevorrichtung mit den erfassten Strom- bzw. Spannungswerten verglichen werden können.

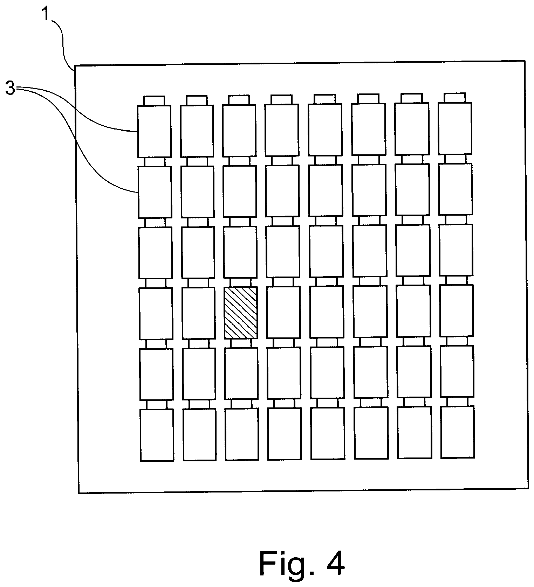

FIG. 4 zeigt den Aufbau einer herkömmlichen Batterieanordnung 1. Bei einer herkömmlichen Batterieanordnung 1 sind alle elektrochemischen Einzelzellen bzw. Sekundärelemente 3 in einem gemeinsamen Gehäuse verpackt. Bei einem thermischen Durchgehen einer oder mehrerer elektrochemischer Einzelzellen 3 aufgrund eines Defekts (schraffierter Bereich), werden gleichzeitig die umliegenden Einzelzellen 3 (schraffierter Bereich) in Mitleidenschaft gezogen und möglicherweise auch beschädigt. Unter Umständen kann ein Durchbrennen einer einzelnen Einzelzelle so viele umliegende weitere Einzelzellen beschädigen, dass die gesamte Batterieanordnung nicht mehr verwendet werden kann. Durch die in dieser Anmeldung beschriebene Batterieanordnung kann dies weitgehend verhindert werden.

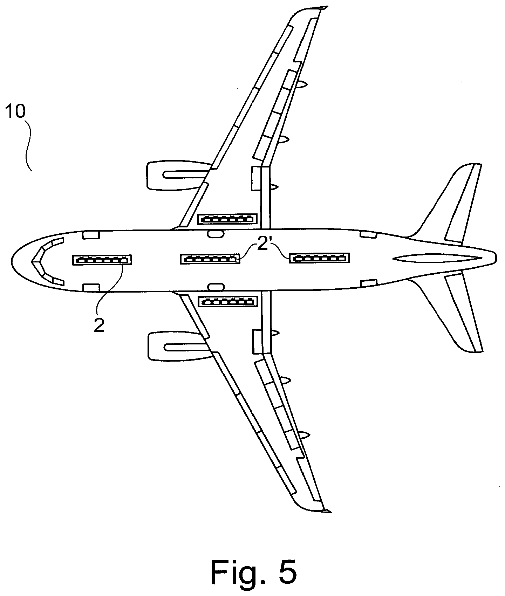

FIG. 5 zeigt ein Flugzeug 10 mit einer Ausführungsform der Batterieanordnung zeigt. Die Batterieanordnung weist eine Mehrzahl von Batteriezellen 2, 2' auf. Die Batteriezellen 2, 2' sind in unterschiedlichen Bereichen des Flugzeugs, beispielsweise im Rumpf und den Tragflächen angeordnet. Durch die räumliche Trennung der Batteriezellen 2, 2' wir eine möglichst gute thermische Isolation der einzelnen Batteriezellen 2, 2' untereinander erreicht. Bei einem Defekt einer oder mehrerer elektrochemischer Einzelzellen einer Batterieanordnung, mit einem möglicherweise verbundenen thermischen Durchgehen, kann diese Batteriezelle 2 von den weiteren Batteriezellen 2' elektrisch getrennt werden. Die weiteren Batteriezellen 2' stehen weiterhin zu Verfügung und können mit einer geringfügig reduzierten Leistung weiter verwendet werden. Ein Totalausfall der kompletten Batterieanordnung wird hierdurch weitestgehend verhindert.

Obwohl die Erfindung vor allem unter Bezugnahme auf bestimmte Ausführungsformen gezeigt und beschrieben worden ist, sollte von denjenigen, die mit dem Fachgebiet vertraut sind, verstanden werden, dass zahlreiche Änderungen bezüglich Ausgestaltung und Details daran vorgenommen werden können, ohne vom Wesen und Bereich der Erfindung, wie durch die angefügten Ansprüche definiert, abzuweichen. Der Bereich der Erfindung wird somit durch die angefügten Ansprüche bestimmt, und es ist daher beabsichtigt, dass sämtliche Änderungen, welche unter den Wortsinn der Ansprüche fallen, umfasst werden.

### Bezugszeichenliste

- 1: Batterieanordnung
- 2, 2`: Batteriezelle
- 3: elektrochemische Einzelzelle
- 4: Überwachungsvorrichtung
- 41: Erfassungseinheit
- 42: Auswertevorrichtung
- 43: Speichervorrichtung
- 44: Kommunikationsvorrichtung
- 5: weitere Überwachungsvorrichtung
- 10: Flugzeug

## Patentansprüche

1. Fahrzeug (10), aufweisend mindestens eine Batterieanordnung (1), die Batterieanordnung (1) aufweisend eine Mehrzahl von elektrisch miteinander verbundenen Batteriezellen (2, 2'),
- wobei jede der Batteriezellen (2) eine Mehrzahl von elektrochemischen Einzelzellen (3) aufweist,
- wobei jede der elektrochemischen Einzelzellen (3) eine Überwachungsvorrichtung (4) aufweist, und
- wobei die Überwachungsvorrichtung (4) eingerichtet ist, die Batteriezelle (2) von den weiteren Batteriezellen (2') elektrisch zu trennen, wenn mindestens ein von der Überwachungsvorrichtung (4) zu überwachender Messwert außerhalb eines vorbestimmten Wertebereichs liegt,
**dadurch gekennzeichnet, dass**
jede der Batteriezellen (2) ein eigenständiges Bauelement ist, von den weiteren Batteriezellen (2') der Mehrzahl von Batteriezellen (2, 2') thermisch isoliert ist, wobei die Batteriezellen (2) räumlich getrennt voneinander in unterschiedlichen Bereichen des Fahrzeugs angeordnet sind, sodass bei einem Durchbrennen einer oder mehrerer elektrochemischer Einzelzellen einer Batteriezelle weitere räumlich von dieser beabstandete Batteriezellen der Batterieanordnung nicht davon betroffen sind.

2. Fahrzeug (10) nach einem der vorherstehenden Ansprüche,
wobei die Überwachungsvorrichtung (4) eine Erfassungseinheit (41) aufweist, die eingerichtet ist, den zu überwachenden Messwert der elektrochemischen Einzelzelle (3) zu erfassen.

3. Fahrzeug (10) nach Anspruch 2,
wobei die Überwachungsvorrichtung (4) eine Auswertevorrichtung (42) aufweist, die den von der Erfassungseinheit (41) erfassten Messwert empfängt und ermittelt, ob dieser außerhalb des vorbestimmten Wertebereichs liegt.

4. Fahrzeug (10) nach einem der Ansprüche 2 bis 3,
wobei die Erfassungseinheit (41) mindestens einen Temperatursensor zum Erfassen der Temperatur der elektrochemischen Einzelzelle (3) umfasst.

5. Fahrzeug (10) nach Anspruch 4,
wobei die Überwachungsvorrichtung (4) eingerichtet ist die Batteriezelle (2) von den weiteren Batteriezellen (2') der Mehrzahl von Batteriezellen (2, 2') elektrisch zu trennen, wenn die von dem Temperatursensor erfasste Temperatur der elektrochemischen Einzelzelle (3) außerhalb eines vorbestimmten Temperaturbereichs liegt.

6. Fahrzeug (10) nach Anspruch 5,
wobei die Überwachungsvorrichtung (4) eingerichtet ist die Batteriezelle (2) elektrisch von den weiteren Batteriezellen (2') zu trennen, wenn die erfasste Temperatur der elektrochemischen Einzelzelle (3) über einem vorbestimmten Temperaturwert liegt.

7. Fahrzeug (10) nach einem der Ansprüche 2 bis 6,
wobei jeder der Batteriezellen (2) mindestens eine weitere Erfassungseinheit (5) aufweist, die einen Spannungssensor zum Erfassen der an der Batteriezelle (2) anliegenden Spannung umfasst.

8. Fahrzeug (10) nach einem der Ansprüche 2 bis 7,
wobei die mindestens eine weitere Erfassungseinheit (5) einen Stromsensor zum Erfassen des an der Batteriezelle (2) anliegenden Stroms umfasst.

9. Fahrzeug (10) nach einem der vorherstehenden Ansprüche,
wobei die elektrochemischen Einzelzelle (3) ein Lithium-Akkumulator ist.

10. Fahrzeug (10) nach Anspruch 9,
wobei der Lithium-Akkumulator ein Lithium-Schwefel-Akkumulator ist.

11. Fahrzeug (10) nach einem der vorhergehenden Ansprüche,
wobei das Fahrzeug (10) ein Fluggerät ist.

12. Fahrzeug (10) nach Anspruch 11,
wobei das Fluggerät ein unbemanntes Flugzeug ist.

13. Fahrzeug (10) nach einem der Ansprüche 11 bis 12,
wobei das Fluggerät eine Höhenplattform oder ein Pseudosatellit ist.

## Claims

1. Vehicle (10), having at least one battery arrangement (1), the battery arrangement (1) having a plurality of battery cells (2, 2') electrically connected to one another;
- wherein each of the battery cells (2) has a plurality of individual electrochemical cells (3);
- wherein each of the individual electrochemical cells (3) has a monitoring device (4); and
- wherein the monitoring device (4) is designed to electrically isolate the battery cell (2) from the further battery cells (2') if at least one measured value to be monitored by the monitoring device (4) is outside a predetermined range of values,
**characterized in that**
each of the battery cells (2) is a standalone component, and is thermally insulated from the further battery cells (2') of the plurality of battery cells (2, 2'), wherein the battery cells (2) are arranged so as to be spatially separate from one another in different areas of the vehicle, such that, in the event of one or more individual electrochemical cells of a battery cell burning out, further battery cells of the battery arrangement that are spaced apart therefrom are not affected.

2. Vehicle (10) according to the preceding claim, wherein the monitoring device (4) has a capture unit (41) that is designed to capture the measured value, which is to be monitored, of the individual electrochemical cell (3) .

3. Vehicle (10) according to Claim 2,
wherein the monitoring device (4) has an evaluation device (42) that receives the measured value captured by the capture unit (41) and ascertains whether it is outside the predetermined range of values.

4. Vehicle (10) according to either of Claims 2 and 3, wherein the capture unit (41) comprises at least one temperature sensor for capturing the temperature of the individual electrochemical cell (3).

5. Vehicle (10) according to Claim 4,
wherein the monitoring device (4) is designed to electrically isolate the battery cell (2) from the further battery cells (2') of the plurality of battery cells (2, 2') if the temperature, which is captured by the temperature sensor, of the individual electrochemical cell (3) is outside a predetermined temperature range.

6. Vehicle (10) according to Claim 5,
wherein the monitoring device (4) is designed to electrically isolate the battery cell (2) from the further battery cells (2') if the captured temperature of the individual electrochemical cell (3) is above a predetermined temperature value.

7. Vehicle (10) according to one of Claims 2 to 6,
wherein each of the battery cells (2) has at least one further capture unit (5) that comprises a voltage sensor for capturing the voltage present at the battery cell (2) .

8. Vehicle (10) according to one of Claims 2 to 7,
wherein the at least one further capture unit (5) comprises a current sensor for capturing the current present at the battery cell (2).

9. Vehicle (10) according to one of the preceding claims, wherein the individual electrochemical cell (3) is a lithium rechargeable battery.

10. Vehicle (10) according to Claim 9,
wherein the lithium rechargeable battery is a lithium-sulfur rechargeable battery.

11. Vehicle (10) according to one of the preceding claims,
wherein the vehicle (10) is an aircraft.

12. Vehicle (10) according to Claim 11,
wherein the aircraft is an unmanned aerial vehicle.

13. Vehicle (10) according to either of Claims 11 and 12, wherein the aircraft is a high-altitude platform or a pseudo-satellite.

## Revendications

1. Véhicule (10), comprenant au moins un arrangement de batterie (1), l'arrangement de batterie (1) possédant une pluralité de cellules de batterie (2, 2') reliées électriquement entre elles ;
- chacune des cellules de batterie (2) possédant une pluralité de cellules individuelles (3) électrochimiques ;
- chacune des cellules individuelles (3) électrochimiques possédant un dispositif de surveillance (4) ; et
- le dispositif de surveillance (4) étant conçu pour séparer électriquement la cellule de batterie (2) des autres cellules de batterie (2') lorsqu'au moins une valeur mesurée à surveiller par le dispositif de surveillance (4) se trouve en dehors d'une plage de valeurs prédéterminée,
**caractérisé en ce que**
chacune des cellules de batterie (2) est un composant indépendant, est isolé thermiquement des autres cellules de batterie (2') de la pluralité de cellules de batterie (2, 2'), les cellules de batterie (2) étant disposées séparées spatialement les unes des autres dans différentes zones du véhicule, de sorte que dans le cas d'un claquage par combustion d'une ou plusieurs cellules individuelles électrochimiques d'une cellule de batterie, les autres cellules de batterie de l'arrangement de batterie qui sont espacées spatialement de celle-ci n'en sont pas affectées.

2. Véhicule (10) selon l'une des revendications précédentes, le dispositif de surveillance (4) possédant une unité d'acquisition (41) qui est conçue pour acquérir la valeur mesurée à surveiller de la cellule individuelle (3) électrochimique.

3. Véhicule (10) selon la revendication 2, le dispositif de surveillance (4) possédant un dispositif d'interprétation (42) qui reçoit la valeur mesurée acquise par l'unité d'acquisition (41) et détermine si celle-ci se trouve en dehors de la plage de valeurs prédéterminée.

4. Véhicule (10) selon l'une des revendications 2 à 3, l'unité d'acquisition (41) comportant au moins un capteur de température destiné à acquérir la température de la cellule individuelle (3) électrochimique.

5. Véhicule (10) selon la revendication 4, le dispositif de surveillance (4) étant conçu pour séparer électriquement la cellule de batterie (2) des autres cellules de batterie (2') de la pluralité de cellules de batterie (2, 2') lorsque la température acquise de la cellule individuelle (3) électrochimique se trouve en dehors d'une plage de températures prédéterminée.

6. Véhicule (10) selon la revendication 5, le dispositif de surveillance (4) étant conçu pour séparer électriquement la cellule de batterie (2) des autres cellules de batterie (2') lorsque la température acquise de la cellule individuelle (3) électrochimique est supérieure à une valeur de température prédéterminée.

7. Véhicule (10) selon l'une des revendications 2 à 6, chacune des cellules de batterie (2) possédant au moins une unité d'acquisition supplémentaire (5), laquelle comporte un capteur de tension destiné à acquérir une tension présente au niveau de la cellule de batterie (2).

8. Véhicule (10) selon l'une des revendications 2 à 7, l'au moins une unité d'acquisition supplémentaire (5) comportant un détecteur de courant destiné à acquérir le courant présent au niveau de la cellule de batterie (2).

9. Véhicule (10) selon l'une des revendications précédentes, la cellule individuelle (3) électrochimique étant un accumulateur au lithium.

10. Véhicule (10) selon la revendication 9, l'accumulateur au lithium étant un accumulateur au lithium-soufre.

11. Véhicule (10) selon l'une des revendications précédentes, le véhicule (10) étant un engin volant.

12. Véhicule (10) selon la revendication 11, l'engin volant étant un aéronef sans pilote.

13. Véhicule (10) selon l'une des revendications 11 à 12, l'engin volant étant une plateforme à haute altitude ou un pseudo-satellite.
